Europäisches Patentamt

European Patent Office

Office européen des brevets

(19)

(11) Veröffentlichungsnummer: **0 223 946**
A2

(12) # EUROPÄISCHE PATENTANMELDUNG

(21) Anmeldenummer: 86112588.8

(22) Anmeldetag: 11.09.86

(51) Int. Cl.⁴: **C 01 B 13/02**
B 01 J 7/00

(30) Priorität: 31.10.85 DE 3538764

(43) Veröffentlichungstag der Anmeldung:
03.06.87 Patentblatt 87/23

(84) Benannte Vertragsstaaten:
AT BE CH DE FR GB IT LI NL SE

(71) Anmelder: Rothenberger GmbH & Co.
Werkzeuge-Maschinen KG
Heidelberger Strasse 13
D-6000 Frankfurt/Main(DE)

(72) Erfinder: Rothenberger, Helmut
Mozartstrasse 14
D-6233 Kelkheim Ts.(DE)

(74) Vertreter: Zapfe, Hans, Dipl.-Ing.
Seestrasse 2 Postfach 30 04 08
D-6054 Rodgau-3(DE)

(54) Sauerstofferzeuger mit einem Druckbehälter und einem Patronenhalter für brennbare Sauerstoff-Patronen.

(57) Sauerstofferzeuger für Patronen (20) mit einem Druckbehälter (13) und einem mit diesem verbundenen Patronenhalter (1). Der Patronenhalter ist durch eine gasdichte Trennkupplung (4) in zwei Teilgehäuse (2, 3) unterteilt, und sein Innenraum (19) steht über eine Öffnung (12) mit dem Innenraum (22) des Druckbehälters (13) in Verbindung. Zur Erhaltung der Funktionstüchtigkeit über lange Zeit ist das untere Teilgehäuse (3) im Bereich der Trennkupplung (4) gut wärmeleitend mit dem Druckbehälter (13) verbunden und steht mit diesem über die im Verhältnis zum Innenquerschnitt des unteren Teilgehäuses (3) enge und unverschlossene Öffnung (12) in Verbindung. Weiterhin ist das obere Teilgehäuse unmittelbar oberhalb des Druckbehälters (13) auf das untere Teilgehäuse (3) aufgesetzt und mit einer Kühleinrichtung (24) versehen.

FIG.1

Firma
Rothenberger GmbH & Co.
Werkzeuge-Maschinen KG
Heidelberger Straße 13

D-6000 Frankfurt am Main 1

--------------------------------------------------------

" Sauerstofferzeuger mit einem Druckbehälter
und einem Patronenhalter für brennbare
Sauerstoff-Patronen "

--------------------------------------------------------

Die Erfindung betrifft einen Sauerstofferzeuger für brennbare und in brennendem Zustand sauerstoffabgebende Patronen,
mit einem Druckbehälter und einem mit diesem verbundenen
Patronenhalter, der durch eine gasdichte Trennkupplung in
zwei Teilgehäuse unterteilt ist und dessen Innenraum mit
dem Innenraum des Druckbehälters über eine Öffnung in
Verbindung steht.

Durch die EP-OS 0 142 730 ist ein Sauerstofferzeuger der eingangs beschriebenen Gattung bekannt, bei dem der Patronenhalter an seinem einen Ende zusätzlich zur Trennkupplung ein Anschlußgewinde aufweist, mit dem er als Baueinheit auswechselbar mit Druckgasflaschen verbindbar ist, die ein entsprechendes Anschlußgewinde aufweisen. Soweit die Druckgasflaschen dabei im Bereich des Anschlußgewindes ein Rückschlagventil aufweisen, bleibt der jeweils in der Druckgasflasche vorhandene Druck auch nach dem Abschrauben des Patronenhalters erhalten.

Obwohl beide Teilgehäuse bei der bekannten Lösung mit Kühlrippen versehen sind, stellt sich an der etwa in der axialen Mitte der Patrone liegenden Trennkupplung eine relativ hohe Temperatur ein, durch die die als Schraubgewinde ausgeführte Trennkupplung allmählich schwergängig und die in der Trennkupplung vorhandene Dichtung thermisch hoch belastet wird. Hierbei ist zu beachten, daß die Brenntemperatur der Patrone an der Oberfläche durchaus 650 °C betragen kann und daß die Brennzone durch die Trennkupplung hindurchwandert. Dies führt bei kurz aufeinanderfolgenden Beschickungen mit frischen Patronen zu einem zusätzlichen Temperaturanstieg mit entsprechend größeren thermischen Problemen.

Durch die DE-OS 24 61 681 ist es bereits bekannt, einen einteiligen Patronenhalter vollständig innerhalb eines Druckbehälters unterzubringen, so daß die

- 3 -

gesamte Wärmeentwicklung innerhalb des Druckbehälters stattfindet und diesen thermisch hoch belastet, so daß besondere Vorkehrungen für einen Schutz des Druckbehälters gegen Korrosion getroffen werden müssen. Hinzukommt, daß der Patronenhalter zum Patronenwechsel aus einer entsprechend groß dimensionierten Öffnung herausgenommen werden muß, so daß bei einem Patronenwechsel der ursprünglich praktisch reine Sauerstoff durch Umgebungsluft mit einem Stickstoffanteil von ca. 80 % ersetzt wird. Dies führt zu einem schwer kontrollierbaren Brennverhalten einer durch den Sauerstofferzeuger versorgten Flamme, da der Sauerstoffanteil erst allmählich von etwa 20 % auf nahezu 100 % anwächst. Dieses Spiel wiederholt sich bei jedem Patronenwechsel von Neuem.

Durch die US-PS 2 775 511 ist ein Sauerstofferzeuger bekannt, bei dem der einteilige Patronenhalter vollständig außerhalb des Druckbehälters liegt, so daß dieser den Patronenhalter bei der Kühlung nicht unterstützen kann. Zwar ist der Patronenhalter mit sehr großflächigen Kühlrippen versehen, jedoch wird auch hierbei eine zwischen dem Patronenhalter und einem Verschlußdeckel vorhandene Dichtung thermisch sehr hoch belastet. Der Patronenhalter ist mit dem Druckbehälter über eine verhältnismäßig lange, in den Druckbehälter hineinragende Rohrleitung verbunden, an deren Ende ein Rückschlagventil angeordnet ist. Wäre dieses nicht vorhanden, dann würde eine in dem Druckbehälter vorhandene Reinigungsflüssigkeit bei noch vorhandenem Oberdruck und beim Öffnen des Patronenhalters durch diesen herausgeschleudert. Das Rückschlagventil führt darüberhinaus bei einer Mehrfachbeschickung des Patronenhalters ohne entsprechenden Sauerstoffverbrauch zu einem Druckanstieg, der durch ein Sicherheitsventil begrenzt werden muß. Dadurch hat die bekannte Vorrichtung einen relativ sehr komplizierten Aufbau.

Ein Rückschlagventil zwischen Patronenhalter und Druckbehälter hat auch bei der Vorrichtung nach der EP-OS 0 142 730 zur Folge, daß im Falle einer Mehrfachchargierung neuer Patronen ein entsprechender Druckanstieg eintritt, der durch ein Oberdruckventil begrenzt werden muß.

Der Erfindung liegt daher die Aufgabe zugrunde, einen Sauerstofferzeuger der eingangs beschriebenen Gattung anzugeben, bei der die Leichtgängigkeit und Dichtigkeit der Trennkupplung über lange Zeit erhalten bleibt und bei der auch ohne Rückschlagventil eine Verdünnung der restlichen, im Druckbehälter zurückbleibenden Sauerstoffmenge durch den Stickstoff der Umgebungsluft sehr weitgehend verhindert wird.

Die Lösung der gestellten Aufgabe erfolgt bei dem eingangs angegebenen Sauerstofferzeuger erfindungsgemäß dadurch, daß

a) das untere Teilgehäuse im Bereich der Trennkupplung gut wärmeleitend in den Druckbehälter eingesetzt ist und mit diesem über die im Verhältnis zum Innenquerschnitt des unteren Teilgehäuses enge und unverschlossene Öffnung in Verbindung steht, und

b) das obere Teilgehäuse unmittelbar oberhalb des Druckbehälters auf das untere Teilgehäuse aufgesetzt und mit einer Kühleinrichtung versehen ist.

Es ist dabei besonders vorteilhaft, wenn die Trennkupplung etwa in der axialen Mitte der Patrone angeordnet ist.

Durch das Herausragen des Patronenhalters, vorzugsweise mit etwa der Hälfte seiner Länge, aus der Druckgasflasche wird ein beträchtlicher Teil der Wärmemenge außerhalb der Druckgasflasche entwickelt und auch dort auf dem kürzest möglichen Wege an die Umgebungsluft abgegeben.

Dieser Vorgang wird noch dadurch begünstigt, daß man in besonders vorteilhafter Weise den außerhalb der Druckgasflasche liegenden Teil des Patronenhalters aus einem gut wärmeleitenden Werkstoff wie Messing herstellt und ihn zusätzlich mit Kühlrippen versieht.

Durch die gut wärmeleitende Verbindung der unteren, beispielsweise aus Stahl bestehenden, Hälfte des Patronenhalters wird der dort entstehende Teil der Wärme durch Wärmeleitung an die Masse der verhältnismäßig starkwandigen Druckgasflasche abgegeben, verteilt sich also auf diese Weise und wird nachfolgend über die verhältnismäßig große Oberfläche der Druckgasflasche an die Umgebungsluft abgegeben. Da die gut wärmeleitende Verbindung im Bereich der Trennkupplung vorhanden ist, wird diese einschließlich der zugehörigen Dichtung sehr wirksam gekühlt, so daß ihre Funktionsfähigkeit über sehr lange Zeit erhalten bleibt.

Durch eine im Verhältnis zum Innenquerschnitt des Patronenhalters begrenzte, gegenüber dem Innenraum der Druckgasflasche ständig offene Bohrung wird ein anfälliges Rückschlagventil vermieden und gleichzeitig verhindert, daß beim Öffnen des Patronenhalters bzw. Auswechseln der Patrone ein merklicher Anteil von Luft in die Druckgasflasche eintritt (Drosseleffekt). Ein äußerst geringfügiger Gasaustausch ist allenfalls durch Diffusion möglich, also durch einen extrem langsam ablaufenden Vorgang.

Vor allem aber bietet die unverschlossene Bohrung einen zusätzlichen Sicherheitsfaktor gegen einen Oberdruck: Bei jedem Patronenwechsel muß notwendigerweise etwa noch unter Druck stehender Sauerstoff durch die Bohrung und den (offenen) Patronenhalter entweichen,

0223946

- 7 -

so daß jeder Füllvorgang bei Atmosphärendruck beginnt und ein stufenweiser Druckaufbau ausgeschlossen ist. Ein etwa versagendes Oberdruckventil stellt also keine Gefahr für die Bedienungsperson dar.

Insbesondere kann dem Sauerstofferzeuger von Anfang an Sauerstoff gleichbleibender Reinheit entnommen werden, so daß sich keine Probleme hinsichtlich des Brennverhaltens einer mit dem Sauerstoff versorgten Flamme ergeben.

Die Zusammensetzung des Sauerstoffs vor und nach einem Chargiervorgang ist dabei um so gleichförmiger, je kleiner dasjenige Volumen des Patronenhalters ist, das vor der genannten engen Bohrung liegt und bei einem Patronenwechsel notwendigerweise belüftet wird. In der Regel sollte daher der Patronenhalter die Patrone möglichst eng, d.h. mit einem Abstand von einem Millimeter und darunter umgeben. Es ist daher besonders zweckmäßig, wenn das Volumensverhältnis zwischen dem Innenraum des Patronenhalters und dem Innenraum des Druckbehälters zwischen 1:10 und 1:60 liegt. So kann beispielsweise das Innenvolumen des Patronenhalters im Hinblick auf standardisierte Patronen zwischen etwa 80 und 100 cm³ liegen, während der Druckbehälter vorzugsweise ein Volumen von 4000 cm³ hat.

Im Mantel des Druckbehälters läßt sich somit eine hinreichend große Werkstoffmenge unterbringen, die zusätzlich zur Wärmeabfuhr dient. Dies ist insbesondere dann der Fall, wenn die Wandstärke des Druckbehälters im Bereich des Patronenhalters mindestens 1,5 mm, vorzugsweise mindestens 2,0 mm beträgt. Bei einer praktisch ausgeführten Wandstärke von 3 mm und größerem zeitlichen Abstand von Chargiervorgängen stiegt die Temperatur in der Trennkupplung nicht über den Wert von etwa 80 °C an.

Patronen, insbesondere mantellose Patronen, aus einem Gemisch chemischer Verbindungen, aus denen durch eine exotherme Reaktion Sauerstoff freigesetzt wird, sind seit langem bekannt. In der Regel handelt es sich um ein Gemisch aus einem Alkalimetallchlorat oder -perchlorat und einem oxidierbaren Stoff, der bei seiner Verbrennung nach einem Anzündvorgang gerade so viel Wärme liefert, daß die Reaktion mit etwa gleichbleibender Wanderungsgeschwindigkeit in der Patrone fortschreitet, wobei laufend überschüssiger Sauerstoff freigesetzt wird. Das Reaktionsgemisch bildet dabei einen festen, gepreßten Körper, nämlich die genannte Patrone. Die Temperatur liegt dabei in der Reaktionszone bei etwa 650 °C.

Derartige standardisierte Patronen besitzen einen Durchmesser von 2,7 cm bei einer Länge von 11,7 cm, mithin ein Volumen von ca. 67 cm³. Eine derartige Patrone liefert im Mittel etwa 30 1 Sauerstoff bei Normaldruck, so daß ein Druckbehälter mit einem Volumen von etwa 4 l auf einen Druck von knapp 8 bar aufgefüllt werden kann.

Mit dem erfindungsgemäßen Sauerstofferzeuger ist es möglich, den Druckbehälter kurzfristig und billig wieder aufzufüllen, und zwar auch an Sonn- und Feiertagen, d.h. den typischen "Heimwerkertagen". Die Patronen sind unter Feuchtigkeitsabschluß gefahrlos in großer Menge lagerfähig. Der Preis für die Nachfüllung beträgt etwa 20 % des Preises einer im Handel erhältlichen, gefüllten Druckgasflasche. Die Sauerstoff-Firmen verlangen für den Kreislauf der Flaschen hohe Gebühren. Während das Nachfüllen selbst billig ist, sind Transport und Verwaltung kostenintensiv.

Die Nachfüllung eines Druckbehälters ist außerdem umweltschonend, da nicht mehr eine Vielzahl der entleerten Druckgasflaschen in den Müll wandert. Die abgebrannten Patronen selbst bestehen aus harmlosen Salzen, insbesondere aus Kochsalzen, sowie aus Oxiden der brennbaren Komponenten. Von den abgebrannten Patronen geht also keine Gefahr für die Umwelt aus.

Der Erfindungsgegenstand dient in Verbindung mit einer Brenngasflasche zum Schweissen und Hartlöten mit kleinen und kleinsten Brennern bis hinunter zum Mikrobrenner. Außer für ausgesprochene Heimwerkerarbeiten ist der Erfindungsgegenstand für kunstgewerbliche Arbeiten aller Art, Goldschmiedearbeiten, für den Modellbau und Reparaturarbeiten, auf dem Gebiete der Kältetechnik sowie für Arbeiten in Dentallabors geeignet.

- 10 -

Als Brenngas kommen dabei Propan und Butan, Gemische
dieser Gase sowie vergleichbare Gase in Frage, die
weltweit von zahlreichen Firmen angeboten werden.
In Frage kommen ferner Brenngase mit Acethylenanteilen.

Ein Ausführungsbeispiel des Erfindungsgegenstandes
wird nachfolgend anhand der Figuren 1 bis 4 näher
erläutert.

Es zeigen:

Figur 1        einen vertikalen Axialschnitt durch
               einen vollständiger Sauerstofferzeuger
               in verkleinertem Maßstab,

Figur 2        einen Axialschnitt durch das obere Teilgehäuse des Patronenhalters,

Figur 3        eine Seitenansicht eines Hitzeschutzes
               für das Teilgehäuse gemäß Figur 2 und

Figur 4        einen Schnitt entlang der Linie IV-IV

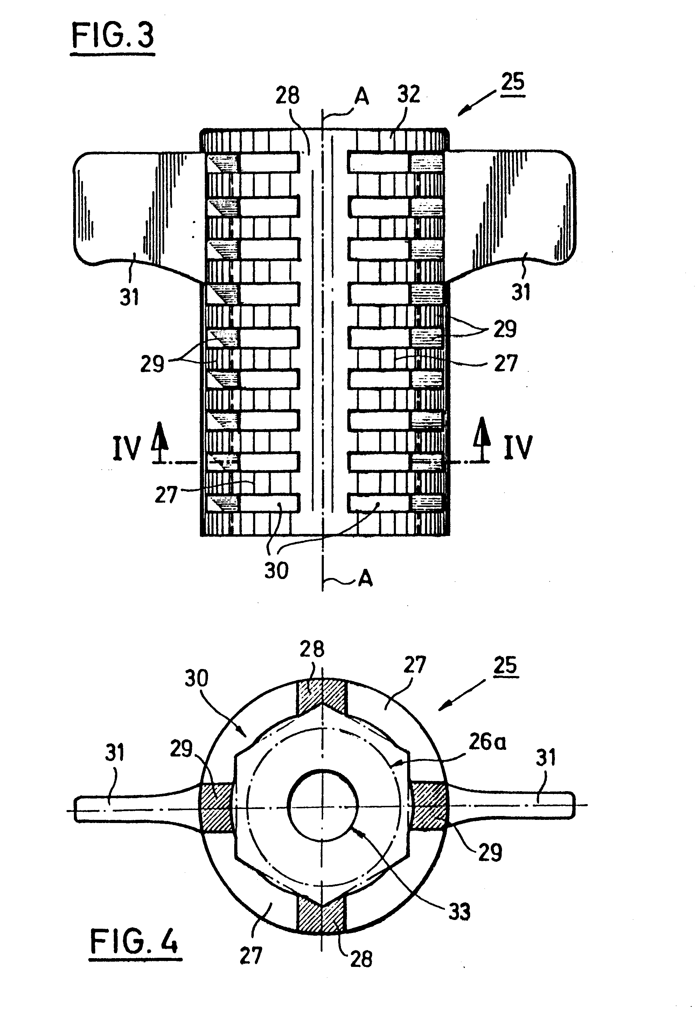

               in Figur 3.

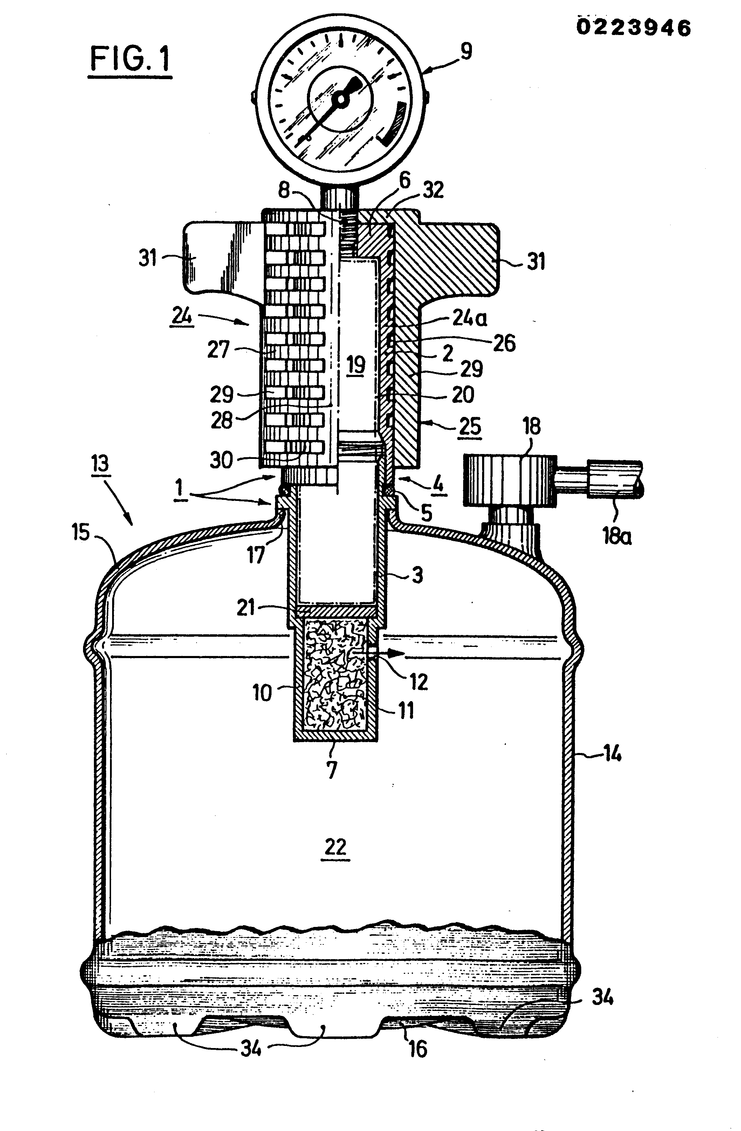

Figur 1 zeigt einen Patronenhalter 1, der aus zwei hülsenförmigen Teilgehäusen 2 und 3 besteht, die über eine Trennkupplung 4 miteinander verbunden sind, die als Schraubgewinde ausgeführt und durch einen Dichtungsring 5 abgedichtet ist.

Die Teilgehäuse 2 und 3 besitzen Stirnwände 6 bzw. 7. In die Stirnwand 6 ist ein Gewindestutzen 8 eines Druckmessers 9 eingeschraubt, der den Druck im gesamten System mißt. Die Stirnwand 7 ist die untere Begrenzungswand eines verjüngten zylindrischen Fortsatzes 10 des Teilgehäuses 3, in dem sich ein Filtermaterial 11 und eine seitliche enge Bohrung 12 für den Austritt des Sauerstoffs befinden.

Das untere Teilgehäuse 3 ist im Bereich der Trennkupplung 4 gut wärmeleitend in einen Druckbehälter 13 eingesetzt, der einen zylindrischen Mantel 14 sowie einen Deckel 15 und einen Boden 16 aufweist. Der Deckel 15 ist mit einem koaxialen Kragen 17 versehen, mit dem das Teilgehäuse 3 verschweißt ist. Ein Druckminderventil 18, an das eine Entnahmeleitung 18a angeschlossen ist, vervollständigen den Druckbehälter 13.

Die Teilgehäuse 2 und 3 umschliessen einen inneren Raum 19, der zur Aufnahme der beschriebenen Patrone 20 dient, deren Umriß hier nur durch einen strichpunktierten Linienzug angedeutet ist. Derartige Patronen sind beispielsweise unter der Bezeichnung "SOLIDOX" im Handel. Die Patrone 20 ruht auf einem Abstandshalter 21, dessen gegenüberliegende Seite dem Filtermaterial 11 zugekehrt

- 12 -

ist. Als Filtermaterial kann beispielsweise eine
Schichtung aus Schamotte-Granulat und Steinwolle
dienen. Der Rand des Abstandshalters 21 weist
eine hier nicht gezeigte Profilierung auf, durch die
der Gasdurchtritt vom Raum 19 in den Fortsatz 10
ermöglicht wird.

Der Querschnitt der Bohrung 12 ist klein im Verhältnis
zum Innenquerschnitt des unteren Teilgehäuses 3,
so daß ein Gasaustausch zwischen dem (geöffneten)
Patronenhalter 1 und dem Innenraum 22 des Druckbehälters 13 erschwert wird.

Das obere Teilgehäuse 2 ist erkennbar unmittelbar oberhalb des
Druckbehälters 13 auf das untere Teilgehäuse 3 aufgesetzt und mit einer Kühleinrichtung 24 versehen, die
durch eine Vielzahl von Kühlrippen gebildet wird.
Dadurch stellt sich ein Temperaturgradient ein, durch
den die Temperatur der Vorrichtung im Bereich der
Trennkupplung 4 merklich herabgesetzt wird. Auch
nach dem Gebrauch der Vorrichtung wird ein rascherer
Wärmeaustausch mit der Umgebung ermöglicht, so daß
die Vorrichtung kurzfristig wieder betriebsbereit
ist.

Das Teilgehäuse 2 ist auf praktisch seiner gesamten
Länge mit einem Hitzeschutz 25 versehen, der aus einem
wärmeisolierenden Werkstoff mit hoher Temperaturbeständigkeit besteht und anhand von Figur 3 noch
näher erläutert werden wird.

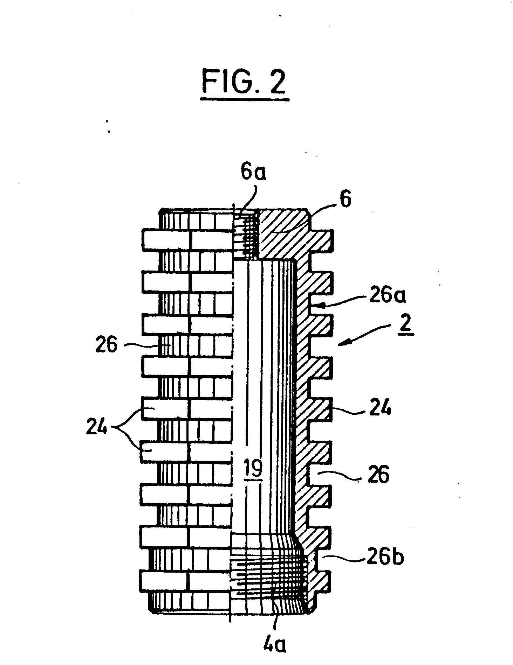

In Figur 2 ist das obere Teilgehäuse 2 dargestellt, das aus einem Sechskantstab aus Messing besteht, in den in äquidistanter Verteilung Nuten 26 mit zylindrischem Nutengrund 26a eingestochen sind, wodurch Kühlrippen 24a der Kühleinrichtung 24 gebildet werden. Das obere Teilgehäuse 2 besitzt ein Innengewinde 4a, während das untere Teilgehäuse 3 ein nicht näher bezeichnetes, komplementäres Außengewinde aufweist, die zusammen die Trennkupplung 4 bilden (Figur 1). Lediglich im Bereich der Trennkupplung 4 haben die Nuten 26b eine geringere Tiefe. Die in der Stirnwand 6 vorhandene Gewindebohrung 6a dient zum Einschrauben des Druckmessers 9.

Die Figuren 3 und 4 zeigen Einzelheiten des Hitzeschutzes 25 in der radialen Draufsicht auf seine Längsachse A-A bzw. im Schnitt entlang der diametralen Linie IV-IV. Der Hitzeschutz 25 besteht aus einer Vielzahl von koaxial hintereinander angeordneten Ringen 27, die auf dem Umfang durch achsparallele Stege 28 bzw. 29 miteinander verbunden sind. Zwischen den Ringen 27 und den Stegen 28 bzw. 29 werden auf diese Weise Entlüftungsöffnungen 30 gebildet, die von den parallelen Wänden der Ringe 27 begrenzt sind und eine Art sektorförmiger Schlitze bilden (Figur 4). Es ist zu erkennen, daß die Ringe 27 mit den Kühlrippen 24a fluchten, so daß die Nuten 26 zwischen den Kühlrippen 24a ungehindert mit der Atmosphäre kommunizieren (Figur 1).

Es ist weiterhin zu erkennen, daß der Hitzeschutz 25 mit radial vorspringenden Handgriffen 31 versehen ist, der dem Hitzeschutz die Eigenschaften einer "Flügelmutter" verleiht. Die Handgriffe 31 sind auf den diametral gegenüberliegenden Stegen 29 angeordnet, während zwischen diesen mit Handgriffen versehenen Stegen 29 noch die weiteren Stege 28 um 90 Grad versetzt und gleichfalls diametral gegenüberliegend angeordnet sind.

In Figur 4 ist der Querschnitt der äußeren Hüllfläche der Kühlrippen 24a durch ein strichpunktiertes Sechseck angedeutet. Es ist zu erkennen, daß die Ringe 27 bzw. die Stege 28 an den Ecken dieses Sechsecks komplementär zu den Kühlrippen ausgebildet sind, so daß eine in Umfangsrichtung formschlüssige Verbindung zwischen dem Hitzeschutz 25 und dem zugehörigen Teilgehäuse 2 gebildet wird. In Richtung der Achse A-A läßt sich der Hitzeschutz 25 jedoch ohne weiteres auf das Teilgehäuse 2 aufschieben. In Figur 4 ist noch der zylindrische Nutengrund 26a durch einen strichpunktierten Kreis angedeutet, und es ist zu erkennen, daß zwischen diesem Nutengrund und den Stegen 28 bzw. 29 ein ausreichender radialer Abstand vorhanden ist, der eine allseitige Belüftung und damit gute Kühlung des Teilgehäuses 2 auch im Bereich des Nutengrundes ermöglicht.

- 15 -

Der Hitzeschutz 25 besitzt im Bereich der Handgriffe 31 eine Stirnwand 32 mit einer Bohrung 33 für den Gewindestützen 8. Nach dem Einschrauben des Druckmessers 9 ist der Hitzeschutz 25 in axialer Richtung unverschiebbar auf dem Teilgehäuse 2 festgelegt.

Speziell Figur 4 ist zu entnehmen, daß der Hitzeschutz 25 aus einer komplementär ausgebildeten Spritzform leicht entformt werden kann, wenn man die Teilungsfuge der Form in Richtung einer durch die Handgriffe 31 verlaufenden Symmetrieebene legt. Die Form kann alsdann lediglich aus zwei Formhälften ohne bewegliche Einsatzteile sowie aus einem Formkern bestehen.

Das untere Teilgehäuse 3 ist gemäß Figur 1 ein einfach herzustellendes Drehteil, bei dem lediglich der Innendurchmesser zwecks Bildung einer Ringschulter für die Auflage des Abstandshalters 21 abgestuft ausgebildet ist.

Gleichfalls Figur 1 ist zu entnehmen, daß der Druckbehälter 13 in seinem Boden 16 mehrere, am äußeren Umfang liegende napfförmige Vertiefungen 34 aufweist. Diese Vertiefungen (sechs an der Zahl) dienen gleichzeitig als Aufstellfüsse und als Sammelbehälter für sich in der Vorrichtung bildendes Kondenswasser, so daß dieses sich nicht zentral an einer einzigen Stelle des Bodens sammeln kann. Es ist möglich, den Behälter im Bodenbereich mit einer verschließbaren Entwässerungsöffnung zu versehen. Das Auswechseln der Patrone(n) erfolgt, durch Abschrauben des Teilgehäuses 2 zusammen mit dem als Flügelmutter ausgebildeten Hitzeschutz 25.

-.-.-.-.-

**A n s p r ü c h e :**

1. Sauerstofferzeuger für brennbare und in brennendem Zustand Sauerstoff abgebende Patronen, mit einem Druckbehälter und einem mit diesem verbundenen Patronenhalter, der durch eine gasdichte Trennkupplung in zwei Teilgehäuse unterteilt ist und dessen Innenraum mit dem Innenraum des Druckbehälters über eine Öffnung in Verbindung steht, <u>dadurch gekennzeichnet</u>, daß

   a) das untere Teilgehäuse (3) im Bereich der Trennkupplung (4) gut wärmeleitend mit dem Druckbehälter (13) verbunden ist und mit diesem über die im Verhältnis zum Innenquerschnitt des unteren Teilgehäuses enge und unverschlossene Öffnung (12) in Verbindung steht,

   b) das obere Teilgehäuse (2) unmittelbar oberhalb des Druckhälters (13) auf das untere Teilgehäuse (3) aufgesetzt und mit einer Kühleinrichtung (24) versehen ist.

2. Sauerstofferzeuger nach Anspruch 1, <u>dadurch gekennzeichnet</u>, daß die Trennkupplung (4) etwa in der axialen Mitte der Patrone (20) angeordnet ist.

3. Sauerstofferzeuger nach Anspruch 1, <u>dadurch gekennzeichnet</u>, daß das obere Teilgehäuse (2) aus einem relativ zu Stahl gut leitendem Werkstoff besteht.

4. Sauerstofferzeuger nach Anspruch 3, dadurch gekennzeichnet, daß das obere Teilgehäuse (2) außen mit Kühlrippen (24a) versehen ist.

5. Sauerstofferzeuger nach Anspruch 1, dadurch gekennzeichnet, daß das Volumensverhältnis zwischen dem Innenraum (19) des Patronenhalters (1) und dem Innenraum (22) des Druckbehälters (13) zwischen 1:10 und 1:60 liegt.

6. Sauerstofferzeuger nach Anspruch 1, dadurch gekennzeichnet, daß die Wandstärke des Druckbehälters (13) im Bereich des Patronenhalters (1) mindestens 1,5 mm, vorzugsweise mindestens 2,0 mm beträgt.

7. Sauerstofferzeuger nach Anspruch 1, dadurch gekennzeichnet, daß der Druckbehälter (13) in seinem Boden (16) mehrere, am äußeren Umfang liegende napfförmige Vertiefungen (34) aufweist.

8. Sauerstofferzeuger nach Anspruch 1, dadurch gekennzeichnet, daß das untere Teilgehäuse (3), ausgehend von der Trennkupplung (4), in den Druckbehälter (13) hineinragt.

9. Sauerstofferzeuger nach Anspruch 8, dadurch gekennzeichnet, daß das untere Ende des Teilgehäuses (3) durch einen zylindrischen Fortsatz (10) gebildet wird, in dem sich ein Filtermaterial (11) und die unverschlossene Öffnung (12) befinden.

- 18 -

10. Sauerstofferzeüger nach Anspruch 1, <u>dadurch gekenn-</u>
<u>zeichnet,</u> daß bei eingesetzter sauerstoffabgebender
Patrone (20) deren obere Stirnfläche oberhalb der
Trennkupplung (4) und deren untere Stirnfläche unterhalb der Trennkupplung (4) liegen.

FIG.1

2/3

## FIG. 2

0223946

FIG.3

FIG.4